# EUROPEAN PATENT APPLICATION

(11) **EP 4 725 756 A1**
(43) Date of publication of application: **15.04.2026**
(21) Application number: 23940630.9
(22) Date of filing: 06.06.2023
(51) Int. Cl.: B60L 58/24

(54) **ELECTRIC VEHICLE CONTROL METHOD AND ELECTRIC VEHICLE CONTROL DEVICE**

(71) Applicant: Nissan Motor Co., Ltd., Yokohama-shi, Kanagawa 221-0023 (JP)
(72) Inventor: NARITA, Sadaharu, Atsugi-shi, Kanagawa 243-0123 (JP); SEKI, Yoshinori, Atsugi-shi, Kanagawa 243-0123 (JP)
(74) Representative: Hoefer & Partner Patentanwälte mbB
(86) International application number: PCT/JP2023/021026
(87) International publication number: WO 2024/252525

(57) **Abstract**

Provided is an electric vehicle control method that selectively executes either a first power limit mode or a second power limit mode as a battery thermal protection mode in which a vehicle driving force is limited based on an upper limit battery power. In the first power limit mode, the upper limit battery power is calculated using a basic upper limit battery power function. In particular, the basic upper limit battery power function is determined to decrease in accordance with an increase in the battery temperature in a temperature region equal to or higher than a basic battery protection temperature. In the second power limit mode, the upper limit battery power is calculated using a corrected upper limit battery power function. In particular, the corrected upper limit battery power function is determined to decrease at a change rate lower than that of the basic upper limit battery power function in accordance with the increase in the battery temperature in a temperature region equal to or higher than a corrected battery protection temperature lower than the basic battery protection temperature.

## Description

### TECHNICAL FIELD

The present invention relates to an electric vehicle control method and an electric vehicle control device.

### BACKGROUND ART

JP2008-123773A describes an in-vehicle maximum output display device that, in an electric vehicle that obtains power using a battery as an output source, calculates a maximum output value of the battery according to a battery temperature, calculates a maximum output of at least one of the battery and a motor, and displays the maximum output on a meter in a vehicle interior.

### SUMMARY OF INVENTION

In the electric vehicle, a vehicle driving force is limited by limiting an output power of the battery so as not to exceed an upper limit power value determined from the viewpoint of heat resistance protection. On the other hand, in a traveling scene requiring a high vehicle driving force, such as during high-load traveling, it is assumed that the maximum output value of the battery is continuously maintained in the vicinity of the upper limit power value, and cooling cannot keep up, which causes an increase in a battery temperature. Therefore, in this case, a process of further strengthening limitation on the vehicle driving force and preventing the increase in the battery temperature (heat resistance protection process) is performed. However, a large driving force step is generated at the time of executing the heat resistance protection process, which may cause an occupant of the electric vehicle to feel uncomfortable.

Therefore, an object of the present invention is to reduce a sense of uncomfortable given to an occupant at the time of executing a heat resistance protection process on a battery.

An aspect of the present invention provides an electric vehicle control method that is executed in an electric vehicle including a battery and an electric motor driven by receiving power supply from the battery, and that adjusts a vehicle driving force output by the electric vehicle based on an upper limit electric motor torque and an upper limit battery power. The electric vehicle control method including: selectively executing either a first power limit mode or a second power limit mode as a battery thermal protection mode in which the vehicle driving force is limited based on the upper limit battery power.

In particular, in the first power limit mode, the upper limit battery power is calculated using a basic upper limit battery power function. The basic upper limit battery power function is determined to decrease in accordance with an increase in a battery temperature in a temperature region equal to or higher than a predetermined basic battery protection temperature. On the other hand, in the second power limit mode, the upper limit battery power is calculated using a corrected upper limit battery power function. The corrected upper limit battery power function is determined to decrease at a change rate lower than that of the basic upper limit battery power function in accordance with an increase in the battery temperature in a temperature region equal to or higher than a corrected battery protection temperature lower than the basic battery protection temperature.

### BRIEF DESCRIPTION OF DRAWINGS

[FIG. 1] FIG. 1 is a diagram illustrating a vehicle configuration to which an electric vehicle control method according to an embodiment of the present invention is applied.
[FIG. 2] FIG. 2 is a block diagram illustrating an overall configuration of an electric vehicle control device (controller).
[FIG. 3] FIG. 3 is a flowchart illustrating overall processing in the electric vehicle control method.
[FIG. 4] FIG. 4 is a diagram illustrating an example of an upper limit battery power map.
[FIG. 5] FIG. 5 is a diagram illustrating an example of an upper limit torque map.
[FIG. 6] FIG. 6 is a diagram illustrating an example of a display mode determination map.
[FIG. 7] FIG. 7 is a diagram illustrating operations and effects of setting of upper limit battery power.
[FIG. 8] FIG. 8 is a timing chart illustrating a control result of Example 1.
[FIG. 9] FIG. 9 is a timing chart illustrating a control result of Example 2.
[FIG. 10] FIG. 10 is a diagram illustrating an example of a control result when an electric vehicle control method according to a second embodiment is executed.

### DESCRIPTION OF EMBODIMENTS

Hereinafter, embodiments of the present invention will be described with reference to the accompanying drawings.

### [First Embodiment]

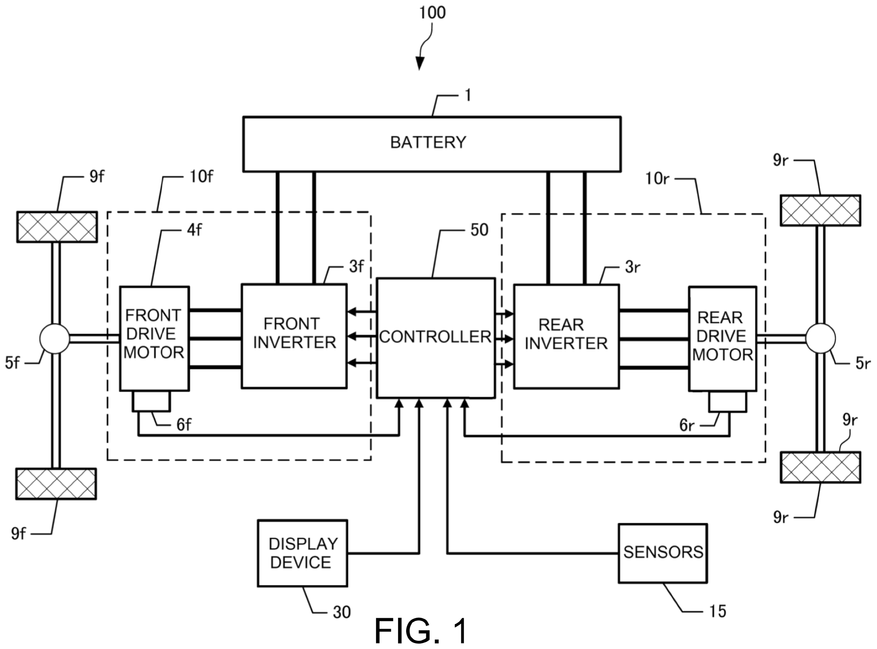

FIG. 1 is a block diagram illustrating a configuration of an electric vehicle 100 according to the present embodiment. The electric vehicle 100 is a vehicle equipped with a motor 4 that is implemented by one or a plurality of (two in FIG. 1) electric motors as a traveling drive source of an electric vehicle (EV), a hybrid electric vehicle (HEV), or the like. In particular, the motor 4 in the present embodiment includes a front motor 4f and a rear motor 4r that are disposed in a front-rear direction.

More specifically, the electric vehicle 100 includes a front motor unit 10f, a rear motor unit 10r, a battery 20, a display device 30, and a controller 50.

The front motor unit 10f is implemented as a unit mainly including a front inverter 3f and the front motor 4f. In particular, the front motor 4f operates by receiving supply of power from the battery 20 via the front inverter 3f, and drives front wheels 9f via a front drive system 5f. In addition, the front inverter 3f converts a direct current supplied from the battery 20 into an alternating current by turning on/off a switching element according to a drive signal generated by the controller 50, and adjusts the current supplied to the front motor 4f.

The rear motor unit 10r is implemented as a unit mainly including a rear inverter 3r and the rear motor 4r. In particular, the rear motor 4r operates by receiving supply of power from the battery 20 via the rear inverter 3r, and drives rear wheels 9r via a rear drive system 5r. The rear inverter 3r converts a direct current supplied from the battery 20 into an alternating current by turning on/off a switching element according to a drive signal generated by the controller 50, and adjusts a current supplied to the rear motor 4r.

The battery 20 is electrically connected to the front motor 4f and the rear motor 4r via the front inverter 3f and the rear inverter 3r, respectively.

In the following description, for simplification of description, reference numerals including front and rear are used as appropriate. Specifically, the front motor unit 10f and the rear motor unit 10r are collectively referred to as a "motor unit 10", the front inverter 3f and the rear inverter 3r are collectively referred to as an "inverter 3", and the front motor 4f and the rear motor 4r are collectively referred to as a "motor 4".

The display device 30 is a device for displaying and notifying an occupant (particularly, driver) of the electric vehicle 100 of predetermined information. The display device 30 is implemented by, for example, an in-vehicle instrument panel. In particular, the display device 30 according to the present embodiment switches pop-up display of a predetermined mark on the instrument panel among first display (pop-up and display red), second display (pop-up and display yellow), and third display (pop-up off) in response to a command from the controller 50.

The controller 50 is a control device for the electric vehicle 100, and is an in-vehicle computer including a central processing unit (CPU), a read-only memory (ROM), a random access memory (RAM), an input/output interface (I/O interface), and the like. Specifically, the controller 50 includes in-vehicle control units such as a vehicle controller (VC) that controls processing of each unit in the electric vehicle 100 and a motor controller that controls the operation of the motor 4.

The controller 50 acquires, from sensors 15, various input values indicating a vehicle situation of the electric vehicle 100, and generates a control signal for controlling the motor unit 10 (operating motor 4) and a control signal for causing the display device 30 to execute predetermined display. In particular, the various input values in the present embodiment include an accelerator opening APO, a speed measurement value V_{_det}, a battery temperature measurement value Te_{b_det}, and a motor temperature measurement value Te_{m_det}.

The accelerator opening APO is a parameter that suggests an amount of operation on an accelerator pedal by the driver of the electric vehicle 100, and is obtained, for example, by a detection value of an accelerator opening sensor (not illustrated). The speed measurement value V_{_det} is a parameter suggesting the current speed V of the electric vehicle 100, and is obtained by a detection value of a speed sensor (not illustrated) or the like.

The battery temperature measurement value Te_{b_det} is a parameter indicating a current temperature of the battery 20 (hereinafter referred to as "battery temperature Te_{b}"). The battery temperature measurement value Te_{b_det} is obtained by, for example, a temperature sensor detection value (not illustrated).

The motor temperature measurement value Te_{m_det} is a parameter indicating a current temperature of the motor 4 (hereinafter referred to as "motor temperature Teₘ"). The motor temperature measurement value Te_{m_det} is obtained by, for example, a maximum value among detection values of temperature sensors disposed in the front motor unit 10f and the rear motor unit 10r.

In particular, the controller 50 calculates a basic command torque Tₘ* corresponding to a driving force required for the electric vehicle 100 based on the accelerator opening APO and the speed measurement value V_{_det}. That is, the basic command torque Tₘ* corresponds to a total value of torques to be output by the front motor 4f and the rear motor 4r.

Further, in the present embodiment, the controller 50 determines an upper limit battery power P_{b_up} and an upper limit motor torque T_{m_up} based on the above-described various input values, and obtains a final command torque Tₘ** by limiting the basic command torque Tₘ* with the upper limit battery power P_{b_up} and/or the upper limit motor torque T_{m_up}.

Here, the upper limit battery power P_{b_up} is an upper limit value of output power of the battery 20 (hereinafter referred to as "battery power P_{b}") determined from the viewpoint of heat resistance protection of the battery 20. More specifically, for example, it is assumed that when the battery power P_{b} becomes excessively high, an amount of heat generated in the battery 20 increases and the battery temperature Te_{b} increases beyond an allowable heat resistance limit. Therefore, an increase in the temperature of the battery 20 is suppressed by appropriately determining the upper limit battery power P_{b_up} and limiting the battery power P_{b}.

In particular, in the present embodiment, the upper limit battery power P_{b_up} is set to a variable value according to the battery temperature Te_{b}, thereby adjusting a degree of limitation on the driving force of the electric vehicle 100 (hereinafter referred to as "vehicle driving force D") according to a change in the battery temperature Te_{b}. More specifically, the controller 50 selectively executes either a first power limit mode or a second power limit mode as a battery thermal protection mode in which the vehicle driving force D is limited based on the upper limit battery power P_{b_up}. Details of the first power limit mode and the second power limit mode will be described later.

The upper limit motor torque T_{m_up} is an upper limit value of an output torque of the motor 4 (hereinafter referred to as "motor torque Tₘ") determined from the viewpoint of heat resistance protection of the motor unit 10. In particular, the upper limit motor torque T_{m_up} is given as an upper limit value for a total torque of the front motor 4f and the rear motor 4r. As described above, it is assumed that in a scene in which the electric vehicle 100 travels on a traveling road that is continuously exposed to a high load, the amount of heat generated by not only the battery 20 but also the motor unit 10 increases and a motor temperature Te increases beyond an allowable heat resistance limit. Therefore, the increase in the temperature of the motor unit 10 is suppressed by appropriately determining the upper limit motor torque T_{m_up} and limiting the motor torque Tₘ.

In particular, the controller 50 adjusts the degree of limitation on the vehicle driving force D by setting the upper limit motor torque T_{m_up} to a variable value corresponding to the motor temperature Teₘ. More specifically, the controller 50 selectively executes either a first torque limit mode or a second torque limit mode as an electric motor thermal protection mode in which the vehicle driving force D is limited based on the upper limit motor torque T_{m_up}. Details of the first torque limit mode and the second torque limit mode will be described later.

Then, the controller 50 operates the front inverter 3f and the rear inverter 3r based on the final command torque Tₘ** and an appropriately determined front-rear driving force distribution ratio, and adjusts the power output from the battery 20 to each of the front motor 4f and the rear motor 4r. Accordingly, the front motor 4f and the rear motor 4r can be operated such that a desired vehicle driving force D is implemented.

In addition, the controller 50 refers to a plurality of thresholds (driving force thresholds C1 and C2) related to an upper limit of the vehicle driving force D (hereinafter referred to as "upper limit vehicle driving force D_{_up}") determined based on the upper limit battery power P_{b_up} and the upper limit motor torque T_{m_up}, determines a corresponding display mode of the display device 30 based on an estimated value of the vehicle driving force D of the current speed measurement value V_{_det} (hereinafter referred to as "actual vehicle driving force D_{_det}"), and causes the display device 30 to display the determined display mode.

Hereinafter, details of various processes executed by the controller 50 will be described.

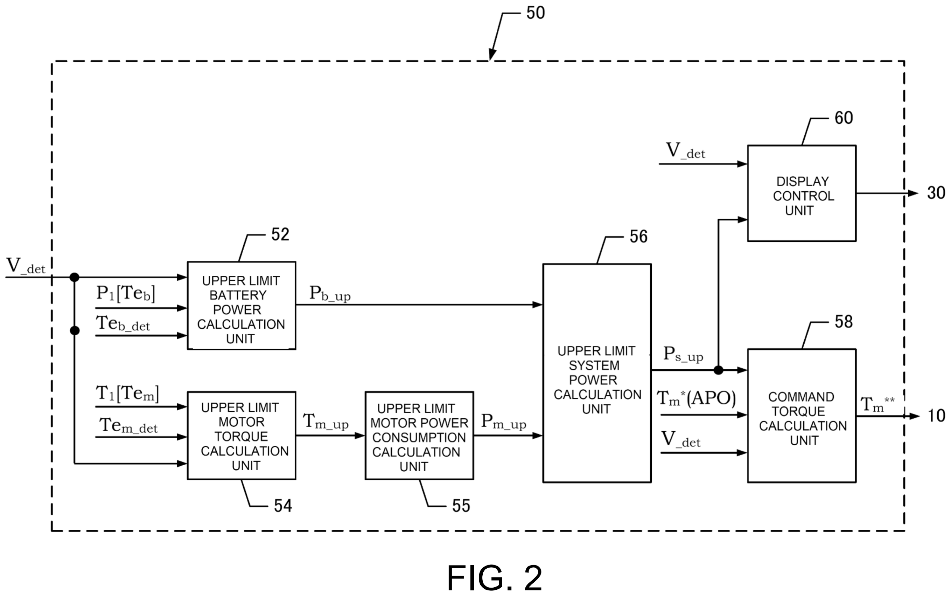

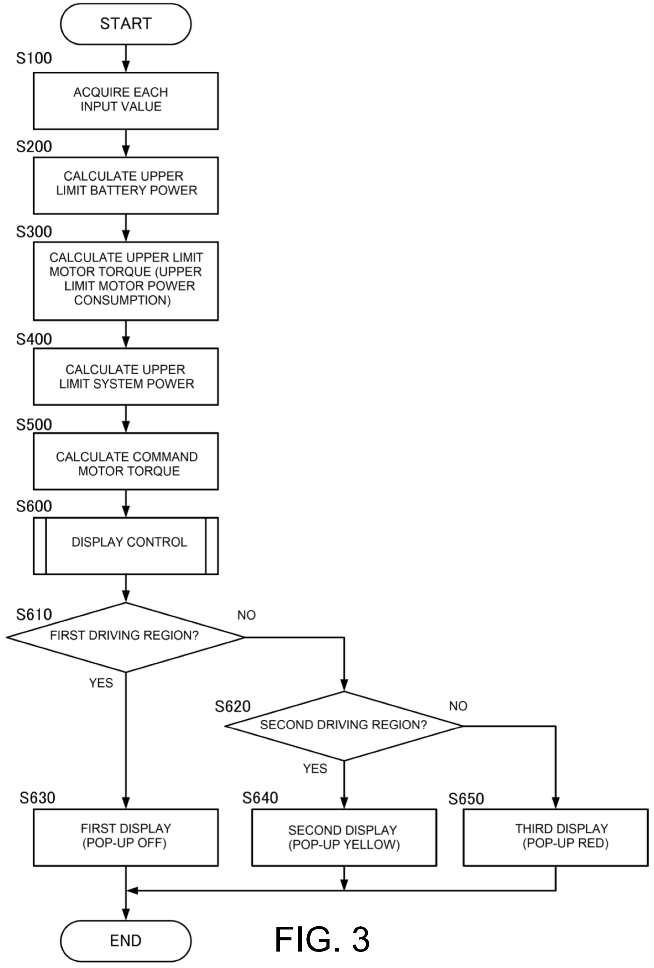

FIG. 2 is a block diagram illustrating an overall configuration of the controller 50 according to the present embodiment. FIG. 3 is a flowchart illustrating a flow of processing by the controller 50. In the present embodiment, the controller 50 performs drive control of the motor unit 10 (motor 4) and display control in the display device 30 by acquiring various input values described above (S100) and executing various calculations (S200 to S650).

More specifically, the controller 50 includes an upper limit battery power calculation unit 52, an upper limit motor torque calculation unit 54, an upper limit motor power consumption calculation unit 55, an upper limit system power calculation unit 56, a command torque calculation unit 58, and a display control unit 60.

The upper limit battery power calculation unit 52 receives the battery temperature measurement value Te_{b_det}, the speed measurement value V_{_det}, and a basic upper limit battery power function P₁[Te_{b}] (S100), and calculates the upper limit battery power P_{b_up} (S200).

Here, the basic upper limit battery power function P₁[Te_{b}] is defined as a profile that strongly limits the battery power P_{b} for heat resistance protection when the battery temperature Te_{b} reaches a predetermined basic upper limit value (hereinafter, referred to as "basic battery protection temperature Te_{b_up1}") while maintaining (suspending limitation on) the battery power P_{b} for securing the traveling performance as much as possible. In particular, the basic upper limit battery power function P₁[Te_{b}] has a profile that takes a fixed value in a temperature region where the battery temperature Te_{b} is lower than the basic battery protection temperature Te_{b_up1} and decreases at a predetermined change rate in a temperature region where the battery temperature Te_{b} is equal to or higher than the basic battery protection temperature Te_{b_up1}.

The controller 50 stores the basic upper limit battery power function P₁[Te_{b}] in a predetermined storage region in advance and acquires the basic upper limit battery power function P₁[Te_{b}] by referring to the storage region, or acquires the basic upper limit battery power function P₁[Te_{b}] as an input value from another in-vehicle control device (such as battery controller).

Then, the upper limit battery power calculation unit 52 generates an upper limit battery power map that defines the basic upper limit battery power function P₁[Te_{b}] and a corrected upper limit battery power function P₂[Te_{b}], and calculates the upper limit battery power P_{b_up} based on the battery temperature measurement value Te_{b_det} and the speed measurement value V_{_det} with reference to the upper limit battery power map.

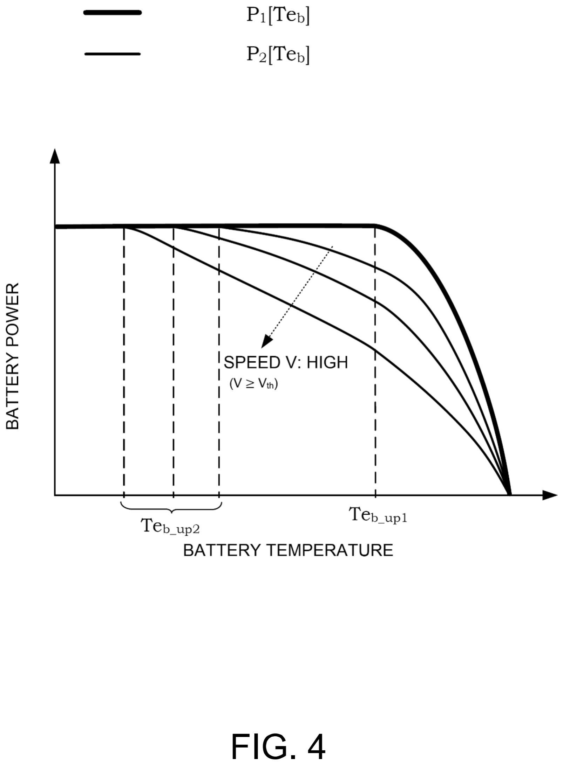

FIG. 4 is a diagram illustrating an example of the upper limit battery power map. In the upper limit battery power map illustrated in FIG. 4, the corrected upper limit battery power function P₂[Te_{b}] in which the change rate (decrease rate) is variable according to a magnitude of the speed V is determined for the determined basic upper limit battery power function P₁[Te_{b}].

The corrected upper limit battery power function P₂[Te₃] is defined as a profile that starts limitation on the battery power P_{b} from a corrected battery protection temperature Te_{b_up2} which is defined to be lower than the basic battery protection temperature Te_{b_uP1}, thereby suppressing the increase in the temperature of the battery 20 while moderating a limit width thereof. In particular, the corrected upper limit battery power function P₂[Te₃] has a profile that takes a fixed value in a temperature region where the battery temperature Te_{b} is lower than the corrected battery protection temperature Te_{b_up2} and decreases at a change rate lower than the basic upper limit battery power function P₁[Te_{b}] in a temperature region where the battery temperature Te_{b} is equal to or higher than the corrected battery protection temperature Te_{b_up2}. In the present embodiment, the change rate (decrease rate) of the corrected upper limit battery power function P₂[Te₃] is set to be larger as the speed V is higher. Further, the corrected battery protection temperature Te_{b_up2} is also determined as a variable value corresponding to the speed V. In particular, as illustrated in FIG. 4, the corrected battery protection temperature Te_{b_up2} is preferably set to a smaller value as the speed V increases. On the other hand, the corrected battery protection temperature Te_{b_up2} may be set to the same value regardless of the speed V.

Then, the upper limit battery power calculation unit 52 obtains the upper limit battery power P_{b_up} using either the basic upper limit battery power function P₁[Te_{b}] or the corrected upper limit battery power function P₂[Te_{b}] according to the speed measurement value V_{_det} and a magnitude of the predetermined speed threshold Vₜₕ.

More specifically, when the speed measurement value V_{_det} is less than the speed threshold Vₜₕ, the upper limit battery power calculation unit 52 calculates the upper limit battery power P_{b_up} by applying the battery temperature measurement value Te_{b_det} to the basic upper limit battery power function P₁[Te_{b}] (first power limit mode). On the other hand, when the speed measurement value V_{_det} is equal to or greater than the speed threshold Vₜₕ, the upper limit battery power calculation unit 52 calculates the upper limit battery power P_{b_up} by applying the speed measurement value V_{_det} and the battery temperature measurement value Te_{b_det} to the corrected upper limit battery power function P₂[Te_{b}] (second power limit mode).

The speed threshold Vₜₕ is set to an appropriate value from the viewpoint of determining a low-speed traveling region in which a margin of the battery power P_{b} is likely to occur with respect to the required vehicle driving force D and a high-speed traveling region in which a margin of the battery power P_{b} is unlikely to occur.

Returning to FIGS. 2 and 3, the upper limit motor torque calculation unit 54 receives the motor temperature measurement value Te_{m_det}, the speed measurement value V_{_det}, and a basic upper limit motor torque function T₁[Teₘ] (S100), and calculates the upper limit motor torque T_{m_up} (S300).

Here, the basic upper limit motor torque function T₁[Teₘ] is defined as a profile that strongly limits the motor torque Tₘ for heat resistance protection when the motor temperature Teₘ reaches a predetermined basic upper limit value (hereinafter, referred to as "basic motor protection temperature Te_{m_up1}") while maintaining (suspending limitation on) the motor torque Tₘ for securing the traveling performance as much as possible. In particular, the basic upper limit motor torque function T₁[Teₘ] has a profile that takes a fixed value in a region where the motor temperature Teₘ is equal to or lower than the basic motor protection temperature Te_{m_up1} and decreases in a region where the motor temperature Teₘ exceeds the fixed value.

The controller 50 stores the basic upper limit motor torque function T₁[Teₘ] in a predetermined storage region in advance and acquires the basic upper limit motor torque function T₁[Teₘ] by referring to the storage region, or acquires the basic upper limit motor torque function T₁[Teₘ] from another in-vehicle control device (motor unit management controller or the like).

Then, the upper limit motor torque calculation unit 54 generates an upper limit motor torque map that defines the basic upper limit motor torque function T₁[Teₘ] and a corrected upper limit motor torque function T₂[Teₘ], and calculates the upper limit motor torque T_{m_up} based on the motor temperature measurement value Te_{m_det} and the speed measurement value V_{_det} with reference to the upper limit motor torque map.

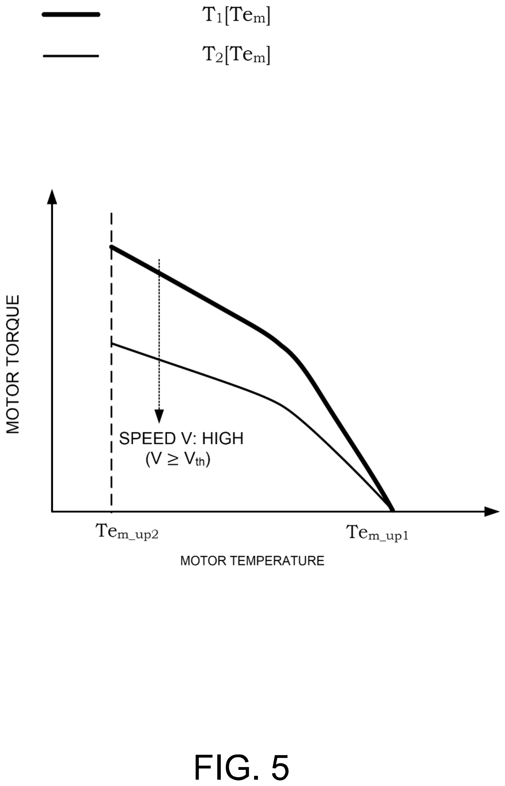

FIG. 5 is a diagram illustrating an example of the upper limit motor torque map. In the upper limit motor torque map illustrated in FIG. 5, the corrected upper limit motor torque function T₂[Teₘ] in which the change rate (decrease rate) is variable according to the magnitude of the speed V is determined for the determined basic upper limit motor torque function T₁[Teₘ].

The corrected upper limit motor torque function T₂[Teₘ] is defined as a profile that starts limitation on the motor torque Tₘ from the corrected motor protection temperature Te_{m_up2} which is set to be lower than the basic motor protection temperature Te_{m_up1}, thereby suppressing the increase in the temperature of the motor 4 while moderating a limit width thereof. In particular, the corrected upper limit motor torque function T₂[Teₘ] has a profile that takes a fixed value in a region where the motor temperature Teₘ is lower than the corrected motor protection temperature Te_{m_up2} and decreases at a change rate lower than the basic upper limit motor torque function T₁[Teₘ] in a temperature region where the motor temperature Teₘ is equal to or higher than the corrected motor protection temperature Te_{m_up2}. In the present embodiment, the change rate (decrease rate) of the corrected upper limit motor torque function T₂[Teₘ] is set to be larger as the speed V is higher.

Then, the upper limit motor torque calculation unit 54 obtains the upper limit motor torque T_{m_up} using either the basic upper limit motor torque function T₁[Teₘ] or the corrected upper limit motor torque function T₂[Teₘ] according to the speed measurement value V_{_det} and the magnitude of the speed threshold Vₜₕ.

More specifically, when the speed measurement value V_{_det} is less than the speed threshold Vₜₕ, the upper limit motor torque calculation unit 54 calculates the upper limit motor torque T_{m_up} by applying the motor temperature measurement value Te_{m_det} to the basic upper limit motor torque function T₁[Teₘ] (first torque limit mode). On the other hand, when the speed measurement value V_{_det} is equal to or greater than the speed threshold Vₜₕ, the upper limit motor torque calculation unit 54 calculates the upper limit motor torque T_{m_up} by applying the speed measurement value V_{_det} and the motor temperature measurement value Te_{m_det} to the corrected upper limit motor torque function T₂[Teₘ] (second torque limit mode).

Returning to FIGS. 2 and 3, the upper limit motor power consumption calculation unit 55 obtains an upper limit motor power consumption P_{m_up} by performing calculation such as multiplying the upper limit motor torque T_{m_up} by a predetermined gain.

The upper limit system power calculation unit 56 calculates an upper limit system power P_{v_up} based on the upper limit battery power P_{b_up} and the upper limit motor power consumption P_{m_up} (S400). Here, the upper limit system power P_{v_up} is an upper limit value of power that can be used (consumed) in driving (traveling) of the electric vehicle 100 and operation of accompanying accessories.

In particular, the upper limit system power calculation unit 56 obtains an upper limit system power P_{s_up} by performing minimum selection on the upper limit battery power P_{b_up} and the upper limit motor power consumption P_{m_up} (S400). That is, the upper limit system power P_{v_up} calculated in this way is a parameter suggesting the vehicle driving force D that is allowed in consideration of the heat resistance protection of both the battery 20 and the motor 4. Then, the upper limit system power calculation unit 56 outputs the upper limit system power P_{s_up} to the command torque calculation unit 58 and the display control unit 60.

The command torque calculation unit 58 calculates the final command torque Tₘ** based on the basic command torque Tₘ* determined based on the accelerator opening APO, the speed measurement value V_{_det}, and the upper limit system power P_{s_up}. More specifically, the command torque calculation unit 58 sets a value obtained by limiting the basic command torque Tₘ* by the upper limit system power P_{v_up} as the final command torque Tₘ** (S500).

The display control unit 60 controls the display mode of the display device 30 based on the speed measurement value V_{_det} and the upper limit system power P_{v_up} (S600). More specifically, the display control unit 60 obtains the upper limit vehicle driving force D_{_up} by multiplying the upper limit system power P_{v_up} by a predetermined gain. Further, the display control unit 60 determines the display mode in the display device 30 based on the upper limit vehicle driving force D_{_up} and the speed measurement value V_{_det}.

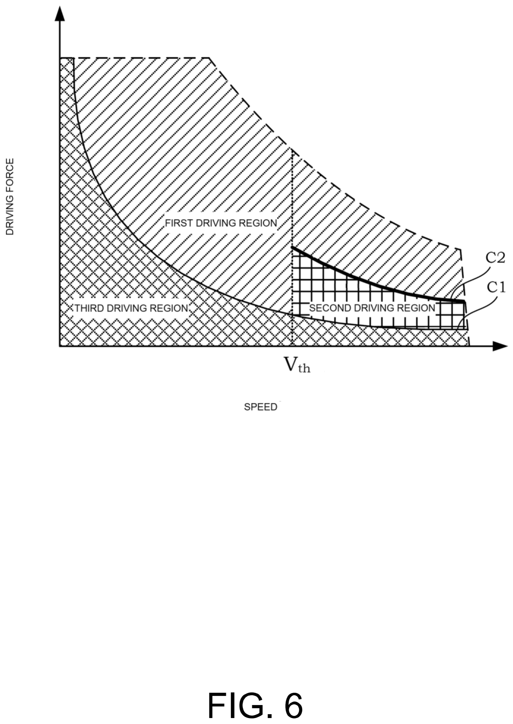

FIG. 6 is a diagram illustrating an example of the display mode determination map. As illustrated in the drawing, in the display mode determination map of the present embodiment, the first driving force threshold C1 when the upper limit vehicle driving force D_{_up} is limited based on the basic upper limit battery power function P₁[Te_{b}] and the second driving force threshold C2 when the upper limit vehicle driving force D_{_up} is limited based on the corrected upper limit battery power function P₂[Te_{b}] are determined. In particular, the second driving force threshold C2 is defined only in a region where the speed V is equal to or higher than the speed threshold Vₜₕ.

Further, when a current driving point (V_{_det}, D_{_up}) including a combination of the speed measurement value V_{_det} and the upper limit vehicle driving force D_{_up} is included in a first driving region, the display control unit 60 causes the display device 30 to execute the first display (Yes in S610 and S630 in FIG. 3). The first driving region is a region in which the speed V is equal to or lower than the speed threshold Vₜₕ and the upper limit vehicle driving force D_{_up} is equal to or greater than the first driving force threshold C1, or the speed V is equal to or higher than the speed threshold Vₜₕ and the upper limit vehicle driving force D_{_up} is equal to or greater than the second driving force threshold C2. The first display means display (pop-up off in present embodiment) that causes the occupant to recognize a situation in which insufficiency of vehicle performance is unlikely to occur (situation in which driving force is unlikely to be limited).

When the current driving point (V_{_det}, D_{_up}) of the electric vehicle 100 is included in a second driving region, the display control unit 60 causes the display device 30 to execute the second display (No in S610, Yes in S620, and S640 in FIG. 3). The second driving region is a driving region in which the speed V is equal to or higher than the speed threshold Vₜₕ and the upper limit vehicle driving force D_{_up} is equal to or greater than the first driving force threshold C1 and less than the second driving force threshold C2. The second display is a display mode for causing the occupant to recognize a situation in which the vehicle driving force D is limited to a certain degree. More specifically, as the second display, display for notifying the occupant of the limitation on the driving force to a certain degree (pop-up display yellow in present embodiment) is adopted.

Further, when the current driving point (V_{_det}, D_{_up}) of the electric vehicle 100 is included in a third driving region, the display control unit 60 causes the display device 30 to execute the third display (No in S610, No in S620, and S650 in FIG. 3). The third driving region is a driving region in which the upper limit vehicle driving force D_{_up} is less than the first driving force threshold C1 in the entire speed range. The third display is a display mode for causing the occupant to recognize a situation in which the vehicle driving force D is strongly limited. More specifically, as the third display, warning display for notifying the occupant of the strong limitation on the driving force (in present embodiment, pop-up display red) is adopted.

With the control logic described above, the controller 50 controls a motor torque T (vehicle driving force D) using the final command torque Tₘ** calculated in consideration of the limitation by the upper limit system power P_{v_up}, and causes the display device 30 to display various display modes based on the upper limit system power P_{v_up}.

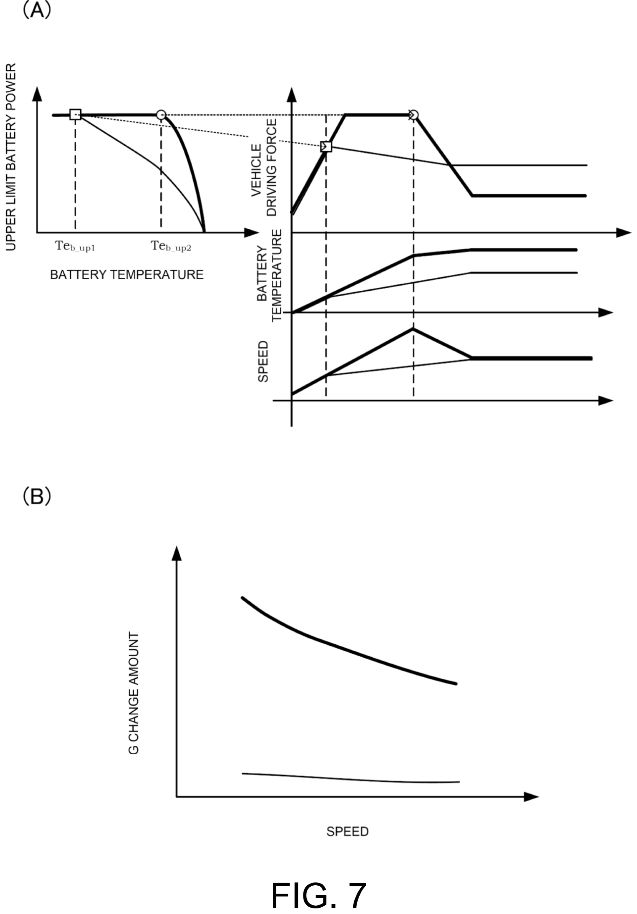

FIG. 7 is a diagram illustrating operations and effects by setting of the upper limit battery power P_{b_up}. In particular, in (A) of FIG. 7, temporal changes of the vehicle driving force D, the battery temperature Te_{b}, and the speed V when the upper limit battery power P_{b_up} is determined based on the basic upper limit battery power function P₁[Te_{b}] (when first power limit mode is executed) and when the upper limit battery power P_{b_up} is determined based on the corrected upper limit battery power function P₂[Te_{b}] (when second power limit mode is executed) are indicated by a thick solid line and a thin solid line, respectively. In (B) of FIG. 7, G changes of the electric vehicle 100 in the above cases are indicated by a thick solid line and a thin solid line, respectively.

As illustrated in the drawing, when the second power limit mode is executed, the battery power P_{b} gradually decreases from an earlier timing than when the first power limit mode is executed, and thus the battery temperature Te_{b} and the vehicle driving force D also gradually decrease accordingly. Therefore, it is possible to obtain the increase suppressing effect of the battery temperature Te_{b} while suppressing a step of the vehicle driving force D during the driving force limitation.

Next, each example of a control result when the control logic of the electric vehicle control method according to the present embodiment is applied will be described.

### (Example 1)

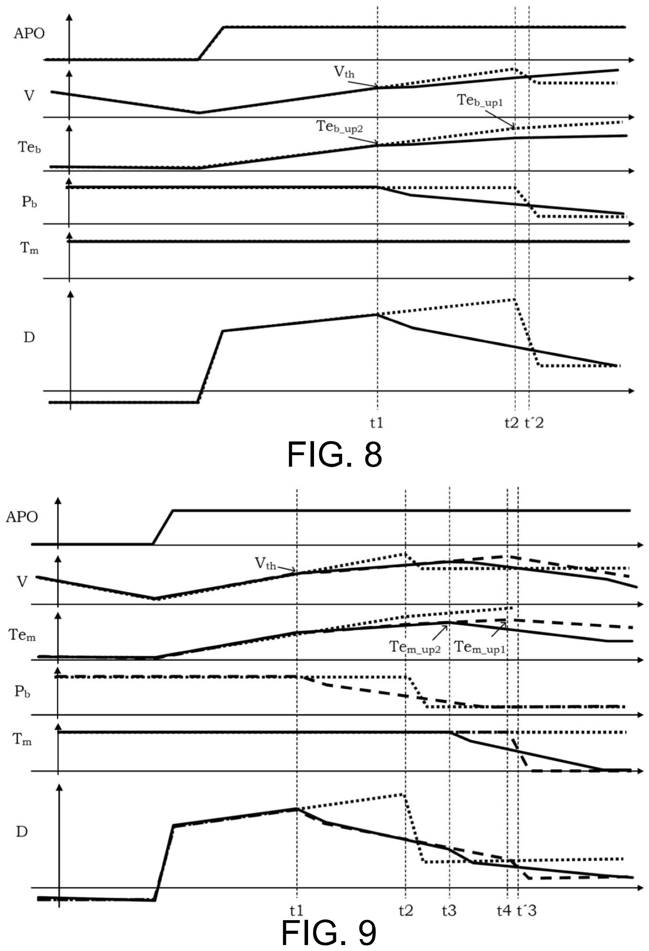

FIG. 8 is a timing chart illustrating a control result of Example 1 with the electric vehicle control method according to the present embodiment. In particular, in Example 1, a control result in a case where as a control mode, the first power limit mode is executed when the speed V is lower than the speed threshold Vₜₕ and the second power limit mode is executed when the speed V is equal to or higher than the speed threshold Vₜₕ is assumed. In FIG. 8, transition of each amount in the control result of Example 1 is indicated by a solid line. Further, in FIG. 8, the transition of each amount in the control result (Comparative Example 1) when the first power limit mode is continuously executed regardless of the speed V is indicated by a dotted line. In FIG. 8, the upper limit motor power consumption P_{m_up} is constant for simplification of the drawing.

As illustrated in the drawing, first, in Comparative Example 1, the battery power P_{b} starts to rapidly decrease when the battery temperature Te_{b} reaches the basic battery protection temperature Te_{b_up1} (time point t2). Accordingly, although a high increase-suppressing effect of the battery temperature Te_{b} is obtained, the vehicle driving force D also rapidly decreases, so that a large driving force step occurs, and an occupant (particularly, driver) of the electric vehicle 100 feels uncomfortable.

On the other hand, in Example 1, the upper limit battery power P_{b_up} is determined based on the corrected upper limit battery power function P₂[Te_{b}] in a region where the speed V is equal to or higher than the speed threshold Vₜₕ (see FIG. 4). Therefore, the battery power P_{b} starts to gradually decrease along the profile of the corrected upper limit battery power function P₂[Te₃] when the battery temperature Te_{b} at which the speed V becomes equal to or higher than the speed threshold Vₜₕ increases and reaches the corrected battery protection temperature Te_{b_up2} (time point t1). As the battery power P_{b} decreases, the vehicle driving force D gradually decreases and the increase in the battery temperature Te_{b} is suppressed. Therefore, in the control of Example 1, when the vehicle driving force D is limited in a traveling scene in a high-speed range, it is possible to suppress the driving force step and reduce the uncomfortable feeling given to the occupant while securing the thermal protection function for the battery 20. In particular, in Example 1, since the suppression of the increase in the battery temperature Te_{b} is started at an earlier timing than in Comparative Example 1, the battery temperature Te_{b} at the time point t2 at which the limitation is started in Comparative Example 1 becomes relatively low. Therefore, the amount of increase in the battery temperature Te_{b} can be increased, and the upper limit battery power P_{b_up} can be further increased (after time point t'2 in FIG. 8). That is, the limit width (decrease width) of the vehicle driving force D can also be reduced.

### (Example 2)

FIG. 9 is a timing chart illustrating a control result of Example 2 with the electric vehicle control method according to the present embodiment. In particular, in Example 2, on the premise that the control mode is selected as in Example 1, a control result in the case where the first torque limit mode is executed when the speed V is lower than the speed threshold Vₜₕ and the second torque limit mode is executed when the speed V is equal to or higher than the speed threshold Vₜₕ is assumed. In FIG. 9, transition of each amount in the control result of Example 2 is indicated by a solid line. Further, in FIG. 9, transition of each amount in the control result (Comparative Example 2) when the first torque limit mode is continuously executed regardless of the speed V is indicated by a dotted line. In FIG. 9, for reference, the control result of Comparative Example 1 (control result when first power limit mode is continuously executed regardless of speed V) is indicated by a broken line.

As illustrated, first, in Comparative Example 1, the motor torque Tₘ starts to decrease rapidly when the motor temperature Teₘ reaches the basic motor protection temperature Te_{m_up1} (time point t3). Accordingly, although a high increase-suppressing effect of the motor temperature Teₘ is obtained, the vehicle driving force D also rapidly decreases, so that a large driving force step occurs, and an occupant (particularly, driver) of the electric vehicle 100 feels uncomfortable.

On the other hand, in Example 2, when the motor temperature Teₘ increases and reaches the corrected motor protection temperature Te_{m_up2} (time point t3) in a situation where the vehicle driving force D is limited by execution of the second power limit mode in a region where the speed V is equal to or higher than the speed threshold Vₜₕ (after time point t1), the motor torque Tₘ starts to gradually decrease along the profile of the corrected upper limit motor torque function T₂[Teₘ]. With the decrease in the motor torque Tₘ, the increase in the motor temperature Teₘ is suppressed while the vehicle driving force D gradually decreases. Therefore, in the control of Example 2, when the vehicle driving force D is limited in a traveling scene in a high-speed range, it is possible to suppress a driving force step and reduce the uncomfortable feeling given to the occupant while securing the thermal protection function for both the battery 20 and the motor unit 10. In particular, in Example 2, the suppression of the increase in the motor temperature Teₘ is started at an earlier timing than in Comparative Example 2, so that the motor temperature Teₘ at the time point t3 at which the limitation is started in Comparative Example 3 becomes relatively low. Therefore, the amount of increase in the motor temperature Teₘ can be increased, and the upper limit motor torque T_{m_up} can be further increased (after time point t'3 in FIG. 9). That is, the limit width (decrease width) of the vehicle driving force D can also be reduced.

The configuration of the electric vehicle control method according to the present embodiment described above and the operation and the effect thereof will be described.

The present embodiment provides an electric vehicle control method that is executed in the electric vehicle 100 including the battery 20 and the electric motor (motor 4) driven by receiving power supply from the battery 20, and that adjusts the vehicle driving force D output by the electric vehicle 100 based on an upper limit electric motor torque (upper limit motor torque T_{m_up}) and the upper limit battery power P_{b_up}.

In the electric vehicle control method, either a first power limit mode or a second power limit mode is selectively executed as a battery thermal protection mode in which the vehicle driving force D is limited based on the upper limit battery power P_{b_up}. In particular, in the first power limit mode, the upper limit battery power P_{b_up} is calculated using the basic upper limit battery power function P₁[Te₃]. In particular, the basic upper limit battery power function P₁[Te_{b}] is determined to decrease in accordance with an increase in the battery temperature T_{b} in a temperature region equal to or higher than the predetermined basic battery protection temperature T_{b_up1}.

On the other hand, in the second power limit mode, the upper limit battery power P_{b_up} is calculated using the corrected upper limit battery power function P₂[Te_{b}]. In particular, the corrected upper limit battery power function P₂[Te₃] is determined to decrease at a change rate lower than that of the basic upper limit battery power function P₁[Te_{b}] in accordance with an increase in the battery temperature T_{b} in a temperature region equal to or higher than the corrected battery protection temperature T_{b_up2} lower than the basic battery protection temperature T_{b_up1}.

Accordingly, in limiting the vehicle driving force D for the purpose of heat resistance protection of the battery 20, it is possible to appropriately switch between the first power limit mode in which a strong limitation is imposed on the battery power P_{b} (vehicle driving force D) at a predetermined timing while maintaining the battery power P_{b} as high as possible and the second power limit mode in which a gentle limitation is started on the battery power P_{b} (vehicle driving force D) at a relatively early timing. In particular, since the vehicle driving force D can be gradually decreased when the second power limit mode is executed, it is possible to reduce an uncomfortable feeling given to an occupant by reducing a driving force step difference while suppressing a temperature increase of the battery 20.

In the present embodiment, the current speed V (speed measurement value V_{_det}) of the electric vehicle 100 is acquired, and when the speed measurement value V_{_det} is less than the predetermined speed threshold Vₜₕ, the first power limit mode is selected as the battery thermal protection mode. On the other hand, when the speed measurement value V_{_det} is equal to or greater than the speed threshold Vₜₕ, when the speed measurement value V_{_det} is equal to or greater than the speed threshold Vₜₕ, the second power limit mode is executed as the control mode.

Accordingly, the first power limit mode is selected in a low-speed range in which a margin is likely to occur in the upper limit battery power P_{b_up} with respect to the required vehicle driving force D, so that it is possible to secure the vehicle output performance by preventing the vehicle driving force D from being limited as much as possible. On the other hand, the second power limit mode is selected in a high-speed range in which there is a tendency for the upper limit battery power P_{b_up} to have no margin with respect to the required vehicle driving force D, so that it is possible to suppress a step of the vehicle driving force D while suppressing the increase in the temperature of the battery 20.

Further, in the present embodiment, a change rate of the corrected upper limit battery power function P₂[Te_{b}] is increased as the speed V increases (see FIG. 4).

Accordingly, a profile of the corrected upper limit battery power function P₂[Te_{b}] can be appropriately determined in consideration of a difference in an increasing tendency of the battery temperature Te_{b} in accordance with a magnitude of the speed V.

In addition, in the present embodiment, display control for switching a display mode for an occupant by the in-vehicle display device 30 is executed with reference to the speed measurement value V_{_det} and the upper limit vehicle driving force D_{_up} determined based on the upper limit battery power P_{b_up}.

In the display control, the first driving force threshold C1 related to the upper limit vehicle driving force D_{_up} is determined based on the basic upper limit battery power function P₁[Te_{b}]. In addition, the second driving force threshold C2 related to the upper limit vehicle driving force D_{_up} is determined based on the corrected upper limit battery power function P₂[Te_{b}]. Then, in a case where the speed measurement value V_{_det} is equal to or greater than the predetermined speed threshold Vₜₕ, first display is executed when the upper limit vehicle driving force D_{_up} is the second driving force threshold C2, second display in a mode different from the first display is executed when the upper limit vehicle driving force D_{_up} is equal to or greater than the first driving force threshold C1 and less than the second driving force threshold C2, and third display different from the first display and the second display is executed when the upper limit vehicle driving force D_{_up} is less than the first driving force threshold C1.

Accordingly, it is possible to perform display (notification to occupant) by the display device 30 in an individual display mode according to a degree of limitation on the vehicle driving force D in accordance with the upper limit battery power P_{b_up}.

In addition, in the present embodiment, either a first torque limit mode or a second torque limit mode is selectively executed as an electric motor thermal protection mode in which the vehicle driving force D is limited based on the upper limit motor torque T_{m_up}. In particular, in the first torque limit mode, the upper limit motor torque T_{m_up} is calculated using a basic upper limit electric motor torque function (basic upper limit motor torque function T₁[Teₘ]). The basic upper limit motor torque function T₁[Teₘ] is determined to decrease in accordance with an increase in the battery temperature T_{b} in a temperature region equal to or higher than a predetermined basic electric motor protection temperature (basic motor protection temperature Te_{m_up1}).

On the other hand, in the second torque limit mode, the upper limit motor torque T_{m_up} is calculated using a corrected upper limit electric motor torque function (corrected upper limit motor torque function T₂[Teₘ]). The corrected upper limit motor torque function T₂[Teₘ] is determined to decrease at a change rate lower than that of the basic upper limit motor torque function T₁[Teₘ] in accordance with an increase in the battery temperature T_{b} in a temperature region equal to or higher than a corrected electric motor protection temperature (corrected motor protection temperature Te_{m_up2}) that is lower than the basic motor protection temperature Te_{m_up1}.

Accordingly, it is possible to implement the control logic in consideration of heat resistance protection of the motor 4 in addition to the limitation on the vehicle driving force D for suppressing the increase in the temperature of the battery 20 described above. More specifically, it is possible to appropriately switch between the first torque limit mode in which a strong limitation is imposed on the motor torque Tₘ (vehicle driving force D) at a predetermined timing while maintaining the motor torque Tₘ as high as possible and the second torque limit mode in which a gentle limitation is started on the motor torque Tₘ (vehicle driving force D) at a relatively early timing. In particular, when the second torque limit mode is executed, the vehicle driving force D can be gradually decreased, so that it is possible to reduce a driving force step and reduce the uncomfortable feeling given to the occupant while suppressing the increase in the temperature of the motor 4.

Further, the present embodiment provides an electric vehicle control device (controller 50) suitable for execution of the electric vehicle control method described above. The controller 50 includes a thermal protection control unit (52, 54, 55, 56, 58) that selectively executes either the first power limit mode or the second power limit mode described above.

### [Second Embodiment]

Hereinafter, a second embodiment will be described. Note that the same elements as those in the first embodiment are denoted by the same reference numerals, and the descriptions thereof will be omitted.

In an electric vehicle control method according to the present embodiment, in addition to the control configuration described in the first embodiment, a logic for forcibly switching the control mode from the second power limit mode to the first power limit mode is adopted in a case where the battery temperature measurement value Te_{b_det} reaches the predetermined allowable limit value Teₘₐₓ when the controller 50 executes the second power limit mode as the control mode.

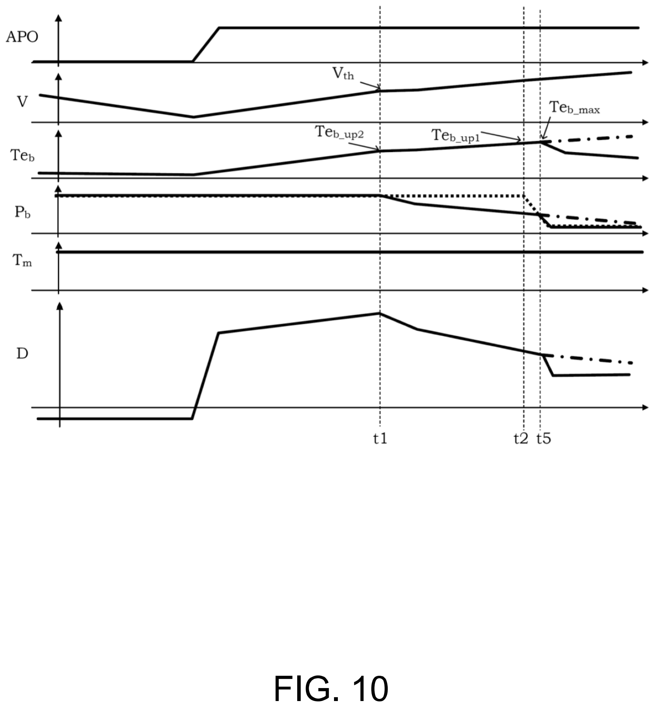

FIG. 10 is a diagram illustrating an example of a control result when the electric vehicle control method according to the present embodiment is executed. As illustrated, in the present embodiment, the control mode is switched from the second power limit mode to the first power limit mode when the battery temperature Te_{b} reaches the allowable limit value Teₘₐₓ (time point t5) in a situation where the vehicle driving force D is limited by executing the second power limit mode in a region where the speed V is equal to or higher than the speed threshold Vₜₕ (after time point t1).

Accordingly, even in a situation in which the vehicle driving force D is limited by the setting of the corrected upper limit battery power function P₂[Te₃], in a scene in which the temperature increase suppression effect of the battery temperature Te_{b} is insufficient and the allowable limit value Teₘₐₓ may be reached, the battery temperature Te_{b} can be more reliably lowered by giving priority to the heat resistance protection of the battery 20.

Although the embodiments of the present invention have been described above, the configurations described in the above-mentioned embodiments are merely examples of applications of the present invention, and are not intended to limit the technical scope of the present invention.

For example, in each embodiment, an example in which the above-described electric vehicle control method is executed on the premise of the electric vehicle 100 in which the front motor unit 10f (front motor 4f) and the rear motor unit 10r (rear motor 4r) for respectively driving the front wheels 9f and the rear wheels 9r are disposed has been described. However, the present invention is not limited thereto, and the control logic described in each of the above embodiments can be appropriately modified and applied to an electric vehicle equipped with one or three or more electric motors as traveling drive sources.

## Claims

1. An electric vehicle control method that is executed in an electric vehicle including a battery and an electric motor driven by receiving power supply from the battery, and that adjusts a vehicle driving force output by the electric vehicle based on an upper limit electric motor torque and an upper limit battery power, the electric vehicle control method comprising:
selectively executing either a first power limit mode or a second power limit mode as a battery thermal protection mode in which the vehicle driving force is limited based on the upper limit battery power, wherein
in the first power limit mode,
the upper limit battery power is calculated using a basic upper limit battery power function,
the basic upper limit battery power function being determined to decrease in accordance with an increase in a battery temperature in a temperature region equal to or higher than a predetermined basic battery protection temperature, and
in the second power limit mode,
the upper limit battery power is calculated using a corrected upper limit battery power function,
the corrected upper limit battery power function being determined to decrease at a change rate lower than that of the basic upper limit battery power function in accordance with an increase in the battery temperature in a temperature region equal to or higher than a corrected battery protection temperature, which is lower than the basic battery protection temperature.

2. The electric vehicle control method according to claim 1, further comprising:
acquiring a current speed of the electric vehicle;
selecting the first power limit mode as the battery thermal protection mode when the current speed is less than a predetermined speed threshold; and
selecting the second power limit mode as the battery thermal protection mode when the current speed is equal to or higher than the speed threshold.

3. The electric vehicle control method according to claim 1, further comprising:
setting the change rate of the corrected upper limit battery power function to be larger as a speed is higher.

4. The electric vehicle control method according to claim 1, further comprising:
switching the battery thermal protection mode from the second power limit mode to the first power limit mode when a battery temperature measurement value reaches a predetermined allowable limit value during execution of the second power limit mode.

5. The electric vehicle control method according to claim 1, further comprising:
executing display control of switching a display mode for an occupant by an in-vehicle display device with reference to a current speed and an upper limit vehicle driving force determined based on the upper limit battery power, wherein
in the display control,
a first driving force threshold related to the upper limit vehicle driving force is determined based on the basic upper limit battery power function,
a second driving force threshold related to the upper limit vehicle driving force is determined based on the corrected upper limit battery power function, and
in a case where the current speed is equal to or higher than a predetermined speed threshold,
first display is executed when the upper limit vehicle driving force is equal to or greater than the second driving force threshold,
second display in a mode different from the first display is executed when the upper limit vehicle driving force is equal to or greater than the first driving force threshold and less than the second driving force threshold, and
third display different from the first display and the second display is executed when the upper limit vehicle driving force is less than the first driving force threshold.

6. The electric vehicle control method according to claim 1, further comprising:
selectively executing either a first torque limit mode or a second torque limit mode as an electric motor thermal protection mode in which the vehicle driving force is limited based on the upper limit electric motor torque, wherein
in the first torque limit mode,
the upper limit electric motor torque is calculated using a basic upper limit electric motor torque function,
the basic upper limit electric motor torque function being determined to decrease in accordance with an increase in the battery temperature in a temperature region equal to or higher than a predetermined basic electric motor protection temperature, and
in the second torque limit mode,
the upper limit electric motor torque is calculated using a corrected upper limit electric motor torque function,
the corrected upper limit electric motor torque function being determined to decrease at a change rate lower than that of the basic upper limit electric motor torque function in accordance with an increase in the battery temperature in a temperature region equal to or higher than a corrected electric motor protection temperature, which is lower than the basic electric motor protection temperature.

7. An electric vehicle control device that is provided in an electric vehicle including a battery and an electric motor driven by receiving power supply from the battery, and that adjusts a vehicle driving force output by the electric vehicle based on an upper limit electric motor torque and an upper limit battery power, the electric vehicle control device comprising:
a thermal protection control unit configured to selectively execute either a first power limit mode or a second power limit mode as a battery thermal protection mode in which the vehicle driving force is limited based on the upper limit battery power, wherein
in the first power limit mode,
the upper limit battery power is calculated using a basic upper limit battery power function,
the basic upper limit battery power function being determined to decrease in accordance with an increase in a battery temperature in a temperature region equal to or higher than a predetermined basic battery protection temperature, and
in the second power limit mode,
the upper limit battery power is calculated using a corrected upper limit battery power function,
the corrected upper limit battery power function being determined to decrease at a change rate lower than that of the basic upper limit battery power function in accordance with an increase in the battery temperature in a temperature region equal to or higher than a corrected battery protection temperature, which is lower than the basic battery protection temperature.
